Europäisches Patentamt

(19) European Patent Office (11) Publication number: **0 137 507**

Office européen des brevets **B1**

(12) **EUROPEAN PATENT SPECIFICATION**

(45) Date of publication of patent specification: 25.07.90 (51) Int. Cl.⁵: **B 65 G 65/48,** B 65 D 88/30

(21) Application number: 84112231.0

(22) Date of filing: 11.10.84

(54) Transportable container for solids.

(30) Priority: 11.10.83 NO 833692

(43) Date of publication of application:
17.04.85 Bulletin 85/16

(45) Publication of the grant of the patent:
25.07.90 Bulletin 90/30

(84) Designated Contracting States:
AT BE CH DE FR GB IT LI LU NL SE

(56) References cited:
CH-A- 599 884
US-A-2 280 166

(73) Proprietor: **NORSK HYDRO A/S**
**Bygdoy Allé 2**
**N-0257 Oslo 2 (NO)**

(72) Inventor: **Skyllingstad, Olav**
**Krystallvn. 23**
**N-3900 Porsgrunn (NO)**

(74) Representative: **Weickmann, Heinrich, Dipl.-Ing.**
**et al**
**Patentanwälte Dipl.-Ing. H.Weickmann Dipl.-**
**Phys.Dr. K.Fincke Dipl.-Ing. F.A.Weickmann**
**Dipl.-Chem. B. Huber Dr.-Ing. H. Liska Dipl.-**
**Phys.Dr. J. Prechtel Postfach 860820**
**D-8000 München 86 (DE)**

Courier Press, Leamington Spa, England.

**Description**

The present invention relates to transportable containers for transport and storage of solids. Several containers can be stacked upon each other, and this is preferably obtained by securing each container to a permanently arranged frame having means for lifting by crane and/or fork trucks. The upper part of the container can be cylindrical or polygonal, while its lower part is conical or funnel-formed. The inlet and outlet means can be closed by flanges or the like and preferably such that neither water nor air can penetrate into the container.

Containers of the above mentioned type have been used in connection with transport of semi-bulk amounts to ships and oil platforms and are expected to get increased importance for such transport. The usual requirement is that the container shall be designed such that it is self-discharging. This implies among other things that the diameter of the discharge opening has to be sufficiently large to avoid formation of a stable bridge of solids over the opening during discharge. Accordingly, one gets a critical diameter for the discharge opening, and this one will depend on the solid in question. Finely ground cohesive particles might require unpractically large discharge openings, and therefore it can be necessary to equip the container with means for vibration or fluidization in order to get the container emptied.

Such transportable containers comprise a sealing problem which increases by increasing size of the container's discharge opening. Especially if the container shall be used on oil platforms and has to be transported thereto on deck of a supply vessel, it is absolutely necessary that the container's bottom is waterproof. Usually this is obtained by application of a flap which is removed during emptying of the solids into a special discharge means. But if the discharge opening is large, it will be difficult to obtain complete sealing, and during discharge it will be cumbersome to operate a flap weighed down by the complete content of the container.

Another problem related to transportable containers is accurate dosage of the material out of the container. Such containers are for instance used for special, particle-formed chemicals/additives for drilling fluids and it is then important to be able to empty the container by accurate dosage of the desired amounts. This implies that one needs discharge and dosage means which can dosage the particles out of the container over a wide capacity range. Such means should also function even with particles which have poor flowing properties, such as fine-grained cohesive pulverant material.

A special problem related to equipment on oil platforms is that it shall have as low weight as possible at the same time as it shall be robust and can endure the strain it is exposed to, also during transport to the platform.

US-PS 2,280,166 already shows a container of the kind mentioned in the first part of claim 1, the discharge opening of which is so small as not to enable discharging of the container's content by itself so that a scraping device for discharging the container's content is necessary. The spokes in the side elevation view are substantially U-shaped so that they do not fill the profile of the space between the screen and the bottom plate. Therefore, the risk has to be taken that a ring of material which sticks together is formed with non-free flowing materials in this space, said ring not being grasped and conveyed by the spokes so that the function of the device is disturbed. In order to reduce the risk of this bridging as far as possible, a central conus is therefore additionally rotationally driven and provided with vanes which are supposed to revolve the material again and again. From the U-shape of the spokes the further disadvantage results that the lift of material by these spokes depends on the kind of material, that is, with well-flowing material it is transported less, with bad-flowing material which sticks together more material is transported. Therefore, the known device is not suitable for exact dosage of the material.

A further disadvantage of the known construction is also viewed in that no closing flap working together with the discharge opening is provided. The consequence is, for example, that well-flowing material unintentionally streams off through the discharge opening so that the container cannot be used for transporting material of that kind. This is particularly the case, if the spokes are not registered to the screen according to fig. 2 of US-PS 2,280,166, but in a displaced position at which a direct connection from the container to the discharge opening exists. Besides, the possibility of exact dosage of the material by partial closure of the discharge opening is not present. Finally, also water or moisture, respectively, can intrude in the lower part of the container through the constantly opened discharge opening, which is undesired and inadmissible in many cases.

CH-PS 599,884 shows a mud container. Problems concerning bridging and exact dosage of the container's content, do not occur with mud containers. A screen over the discharge opening which prevents bridging on the one hand and on the other works together with the spokes of the scraping device for the purpose of exact dosage can therefore be missing.

The object of the present invention was to arrive at a container which was light and robust at the same time as it was waterproof, and that it could be emptied by accurate dosage of particle-formed material over a wide capacity range.

According to the invention this problem is solved by the features contained in the characterizing part of claim 1.

In order to obtain a watertight discharge opening, it was obvious to make this one as small as possible. As the container's discharge opening needs to have a certain minimum size, the inventors tried to equip the container with a relatively large discharge opening covered by a bottom plate fastened by a flange, but having a small opening for dosage and emptying of the material out of the container. This required special means inside the container itself for charging the content from the total bottom area to the discharge opening. However, such means should be simple and cheap in order to profitably equip each container with such means. In addition, the problem of watertight closure of the container during transport seemed to require special solutions.

The inventor then found that instead of using a discharge flap which covered the complete opening of the container, one could cover the discharge opening with a bottom plate on which one placed a scraping device which could be connected to a drive shaft. In this plate was arranged a small opening which relatively easily could be made waterproof. The flap was easy to operate during discharge as it hardly was pressed down by particle material in the container. This low pressure on the flap has been obtained by placing a screen inside the container and over the discharge opening in the bottom plate. During discharge of the container the discharge speed could be regulated by regulating the speed on the scraping device and/or the size on the area of the discharge opening by moving the flap.

The spokes have a profile in the side elevation view which corresponds to the profile of the space between the screen and the bottom plate; thereby a rather exact quantity of material is being led towards the discharge opening between two spokes limited on the one hand by these spokes and on the other hand by the screen, since the whole cross-section between the screen and the bottom plate is filled by the spoke.

The features of the invention are as defined in the following claims.

The invention will now be further explained in connection with description of the drawings and an example which describes discharge of the container.

Fig. 1 shows the lower part of a container according to the invention.

Fig. 2 shows the container's bottom viewed from above with discharge and dosage means.

Fig. 3 shows details of the discharge opening.

Fig. 4 shows the container's bottom plate viewed from below with the discharge flap.

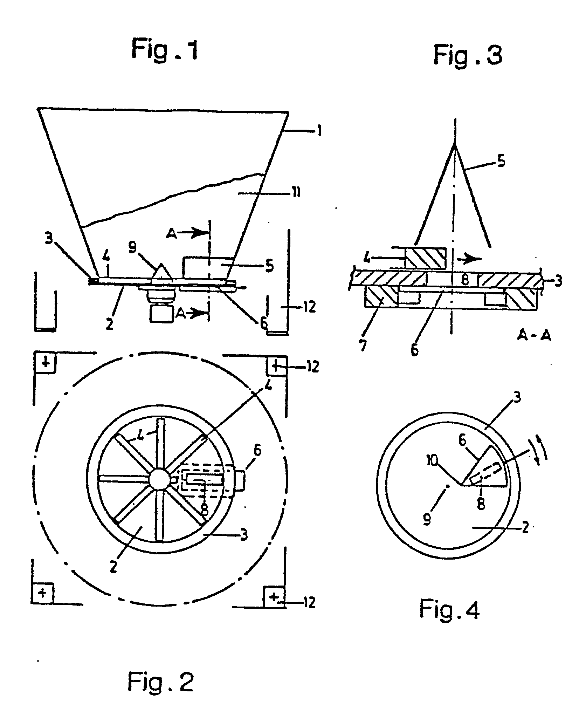

Figure 1 shows the lower part of a container (1) according to the invention, and in this embodiment the lower part is conical, having a circular bottom covered by a bottom plate (2) fastened to the container (1) by a flange (3). The container (1) is shown partly filled with a smaller amount of particle-formed material (11). On the plate (2) there is arranged a scraping device having spokes (4) with substantially the same radius as the total opening of the container (1). The spokes (4) are fastened to a central axis (9) which goes through the centre of the plate (2) and can be connected to driving means (not shown).

In the plate (2) there is a discharge opening (8), and over this one there is a screen (5) fastened to the container's (1) wall. Under the plate (2) and directly under the opening (8) there is arranged a flap (6). The container (1) is permanently mounted in a framework having support legs (12).

Figure 2 shows the container's (1) bottom viewed from above. The scraping device is here shown with eight spokes (4) which can be in the form of simple blades or have conical or other suitable cross-section. The discharge opening (8) is shown rectangular, and its effective discharge area can be regulated by moving the flap (6). When the flap (6) is pulled all the way to the right on the figure, one will have maximum discharge area for the opening (8). Shifting of the flap (6) is preferably carried out manually and the flap can be permanently positioned, defining a predetermined opening for each discharge operation. In the shown position the flap (6) gives a waterproof closure of the opening (8).

Figure 3 shows a cross-section A—A along the bottom plate (2) with the discharge opening (8) which is completely covered by the ridge shaped screen (5), the lower part of which terminates just over the spokes (4), and which is shown here as a cut. Under the opening (8) there is arranged a movable flap (6) which is kept in place by guidances (7).

Figure 4 shows a bottom plate (2) seen from below with discharge opening (8) which can be closed completely by a sector-formed flap (6) which can be rotated around the pin (10) and thereby regulate the area of the effective discharge opening. The flap (6) can be locked in any desired position and will give waterproof sealage of the opening (8) in the shown position.

Example

This example shows how the particle-formed material (11), which is transported in the container, can be discharged and dosed out of the container.

The container is placed with its legs (12) on a plane base or in openings having somewhat larger cross-section than the legs (12) and such that the container (1) is locked tight, and at the same time the shaft (9) can be connected to some driving means which brings the spokes (4) in rotation, whereby the particles (11) are transported towards the opening (8). When the flap (6) is shifted or rotated, the particles (11) will be charged out of the container (1). The discharge speed is regulated by varying the revolution per minute of the scraping device and/or by regulating the size of the discharge opening (8). The particles (11) can be charged downwards to the conveyor or the like using suitable weighing means which can be connected to the adjustable discharge means, whereby very accurate dosage of the material out of the container (1) is obtained.

The scraping device is preferably in form of a wheel having several spokes as shown on figure 2. But it can of course be formed otherwise as long as it functionally works in the same way that means the particles will be transported towards the opening (8).

Likewise the discharge opening (8) can have different shapes, for instance a series of holes which all can be covered by a flap (6). One can also envisage several openings (8) each having its own flap (6). The important thing is that one obtains a wide capacity range for the discharge and that one in a simple way can close the opening (8) watertight.

By the present invention one has obtained containers which can be transported without special coverage and be exposed to rain and sea spray without any danger that the water shall penetrate into the container. At the same time one has got inside in each container a simple and reliable discharge and dosage device which has a wide capacity range and which functions for different types of particle-formed material.

The present invention has also given a container having a large bottom opening, whereby formation of stable bridges of particle-formed material during discharge is avoided, at the same time as the opening which requires special sealing means is small and simple to close such that the container becomes waterproof.

One has also obtained containers which totally are so inexpensive that the extra expenditure related to equipping each container with a discharge/dosage device is indeed justified compared to that which above stated is obtained technically.

**Claims**

1. Transportable container for transport and storage of flowable solids, and where the lower part (1) of the container is closed by a bottom plate (2) fastened to the container, where on the bottom plate (2) is arranged a movable scraping device having spokes (4) fastened to a shaft (9) which can be connected to external driving means, and where the bottom plate (2) has a discharge opening (8), which is covered by a screen (5) spaced from the bottom plate (2) so that the spokes (4) may pass between said bottom plate and said screen (5), characterized in that the spokes (4) have a side elevation profile corresponding to the profile of said space between said screen (5) and said bottom plate (2) and in that the discharge opening (8) can be partially or completely closed by a movable flap (6) arranged under the bottom plate (2).

2. Container according to claim 1, characterized in that the flap (6) is fastened and can be rotated around a pin (10) in the plate (2) such that the area of the effective discharge opening (8) can be varied.

3. Container according to claim 1, characterized in that the flap (6) is arranged in guiding means (7), as known per se, and can be shifted to and fro for regulation of the area of the effective discharge opening (8).

**Patentansprüche**

1. Tranportierbarer Behälter zum Transport und zur Lagerung fließfähiger Feststoffe, wobei der untere Abschnitt (1) des Behälters von einer am Behälter befestigten Bodenplatte (2) verschlossen ist, an der ein bewegliches Abstreifgerät mit an einer an eine äußere Antriebsvorrichtung anschließbaren Welle (9) angebrachten Speichen (4) angeordnet ist, und wobei die Bodenplatte (2) eine Abgabeöffnung (8) aufweist, die von einem im Abstand von der Bodenplatte (2) angeordneten Schirm (5) überdeckt ist, so daß die Speichen (4) zwischen der Bodenplatte (2) und dem Schirm (5) hindurchtreten können, dadurch gekennzeichnet, daß die Speichen (4) in Seitenansicht ein Profil aufweisen, das dem Profil des Zwischenraumes zwischen dem Schirm (5) und der Bodenplatte (2) entspricht, und daß die Abgabeöffnung (8) von einem unter der Bodenplatte (2) angeordneten beweglichen Schieber (6) teilweise oder vollständig verschließbar ist.

2. Behälter nach Anspruch 1, dadurch gekennzeichnet, daß der Schieber (6) an einem Zapfen (10) in der Platte (2) angebracht und um diesen derart drehbar ist, daß die Fläche der wirksamen Abgabeöffnung (8) veränderbar ist.

3. Behälter nach Anspruch 1, dadurch gekennzeichnet, daß der Schieber (6) wie an sich bekannt in Führungen (7) angeordnet und zur Einstellung der Fläche der wirksamen Abgabeöffnung (8) hin- und herschiebbar ist.

**Revendications**

1. Conteneur transportable destiné au transport et au stockage de solides pouvant s'écouler ("fluides"), conteneur dont la partie inférieure (1) est fermée par une plaque (2) de fond fixée au conteneur; sur la plaque (2) de fond est agencé un dispositif mobile de raclage comportant des rayons (4) fixés à un arbre (9) qui peut être connecté à un mécanisme externe d'entraînement, et la plaque (2) de fond comporte une ouverture (8) de décharge, qui est recouverte par une toile (5) de tamis ou écran dont la distance par rapport à la plaque (2) de fond est telle que les rayons (4) peuvent passer entre ladite plaque de fond et ladite toile (5) ou écran, conteneur caractérisé en ce que les rayons (4) ont, en élévation latérale, un profil correspondant au profil dudit espace situé entre ladite toile (5) de tamis et ladite plaque (2) de fond, et en ce que l'ouverture (8) de décharge peut être partiellement ou entièrement fermée par un volet (6) mobile monté sous la plaque (2) de fond.

2. Conteneur selon la revendication 1, caractérisé en ce que le volet (6) est fixé et peut être mis en rotation autour d'une broche ou axe (10) monté(e) dans la plaque (2), ce qui permet de faire varier l'aire de la surface de l'ouverture (8) de décharge efficace.

3. Conteneur selon la revendication 1, caractérisé en ce que le volet (6) est monté dans un organe (7) de guidage, comme cela est connu en soi, et peut être déplacé en avant et en arrière pour réguler l'aire de la surface de l'ouverture (8) de décharge efficace.

# Fig.1

# Fig.3

# Fig.2

# Fig.4